# EUROPÄISCHE PATENTANMELDUNG

(11) **EP 1 331 134 A2**
(43) Veröffentlichungstag der Anmeldung: **30.07.2003**
(21) Anmeldenummer: 02025615.2
(22) Anmeldetag: 19.11.2002
(51) Int. Cl.: B60Q 1/14

(54) **Lenkstockschalter und Schaltersystem**

(30) Priorität: 24.01.2002 DE 10203757
(71) Anmelder: Valeo Schalter und Sensoren GmbH, 74321 Bietigheim-Bissingen (DE)
(72) Erfinder: Grüner, Roland, 71732 Tamm (DE); Morgenroth, Kai Thorsten, 74357 Bönnigheim (DE); Hecht, Walter, 74321 Bietigheim-Bissingen (DE); Klein, Rudolf, 74348 Lauffen a.N. (DE)
(74) Vertreter: Dreiss, Fuhlendorf, Steimle & Becker

(57) **Zusammenfassung**

Die Erfindung betrifft einen Lenkstockschalter für ein Fahrzeug mit einem Schalthebel, der in mehrere Hebelstellungen bewegbar ist.

Die Erfindung kennzeichnet sich dadurch, dass über den Schalthebel verschiedene Menüfunktionen einer programmierbaren Steuer- und/oder Regeleinheit angewählt und betätigt werden können.

## Beschreibung

Die Erfindung betrifft einen Lenkstockschalter für ein Fahrzeug mit einem Schalthebel, der in mehrere Hebelstellungen bewegbar ist. Die Erfindung betrifft ferner ein Schaltersystem mit einem derartigen Lenkstockschalter.

Lenkstockschalter sind über Schalthebel vom Fahrzeuglenker betätigbar. Zur Betätigung muss der Fahrzeuglenker das Lenkrad vorteilhafterweise nicht loslassen. Bekannte Fahrzeuge weisen eine Großzahl von Armaturenbrettschaltern auf, zu deren Betätigung der Fahrzeuglenker das Lenkrad für einen längeren Zeitraum nicht greift. Zum Auffinden des richtigen Armaturenbrettschalters wird der Fahrzeuglenker von dem Geschehen auf der Straße abgelenkt. Beim Betätigen der Armaturenbrettschalter ergibt sich folglich eine erhöhte Unfallgefahr.

Der vorliegenden Erfindung liegt deshalb die Aufgabe zugrunde, die Unfallgefahr beim Betätigen von Schaltern so weit als möglich zu reduzieren.

Hierfür wird ein Lenkstockschalter der eingangs beschriebenen Art erfindungsgemäß dadurch weitergebildet, dass über den Schalthebel verschiedene Menüfunktionen einer programmierbaren Steuer- und/oder Regeleinheit angewählt und gegebenenfalls betätigt werden können. Dies hat den Vorteil, dass auf eine Vielzahl von Armaturenbrettschaltern verzichtet werden kann, da über den Schalthebel Schaltaufgaben betätigt werden können, die nach dem Stand der Technik über Armaturenbrettschalter ausgeführt werden. Anstelle das Lenkrad loszulassen und den entsprechenden Armaturenbrettschalter auszuwählen, kann erfindungsgemäß der Fahrzeuglenker zum Auswählen der gewünschten Schaltfunktion das Lenkrad greifen. Das Unfallrisiko wird folglich verringert.

Die Hebelstellungen des Schalthebels können vorteilhafterweise als Raststellungen und/oder Taststellungen ausgebildet sein. Insbesondere bieten sich entweder 5 oder 9 Hebelstellungen an. Bei 5 Hebelstellungen befindet sich der Schalthebel in einer ersten Hebelstellung in einer neutralen Mittellage. In vertikaler Richtung und in horizontaler Richtung kann der Schalthebel von der neutralen Mittellage aus jeweils in zwei weiteren Hebelstellungen betätigt werden. Bei Vorsehen von 9 Hebelstellungen ist denkbar, dass der Schalthebel aus der neutralen Mittellage zusätzlich in vier zu der neutralen Mittellage diagonal angeordneten Hebelstellungen betätigbar ist.

Eine vorteilhafte Ausführungsform der Erfindung zeichnet sich dadurch aus, dass im Schalthebel wenigstens ein Betätigungsschalter angeordnet ist, der vorzugsweise als Tastschalter ausgebildet ist. Mit dem Betätigungsschalter kann die angewählte Menüfunktion betätigt bzw. ausgeführt werden. Über die verschiedenen Hebelstellungen des Schalthebels wird folglich die gewünschte Menüfunktion ausgewählt und über den Betätigungsschalter betätigt.

Zur Wahrnehmung der Menüfunktionen werden diese vorteilhafterweise auf einem Display angezeigt. Das Display kann hierbei im Bereich des Kombiinstruments des Fahrzeuges oder im Bereich des Armaturenbretts des Fahrzeuges vorgesehen sein.

Die eingangs genannte Aufgabe wird außerdem durch ein Schaltersystem mit einem erfindungsgemäßen Lenkstockschalter, mit einer Steuer- und/oder Regeleinheit und mit einem Display zur Anzeige der Menüfunktionen gelöst.

Vorteilhafterweise erfasst die Steuer- und/oder Regeleinheit den Betriebszustand des Fahrzeuges und sperrt oder gibt frei verschiedene Menüfunktionen je nach Betriebszustand des Fahrzeuges. Dabei ist denkbar, dass während der Fahrt des Fahrzeuges aus Sicherheitsgründen entsprechende Menüfunktionen gesperrt werden.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: ein erfindungsgemäßes Schaltersystem;
- Fig. 2 und 3:: eine erste Ausführungsform eines erfindungsgemäßen Schalthebels;
- Fig. 4:: die Hebelstellungen des Schalthebels gemäß Fig. 2 und 3;
- Fig. 5 und 6:: eine zweite Ausführungsform eines erfindungsgemäßen Schalthebels; und
- Fig. 7:: die Hebelstellungen des Schalthebels gemäß Fig. 5 und 6.

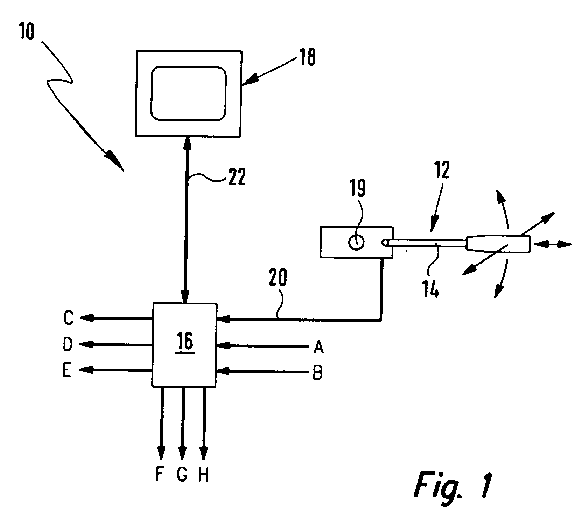

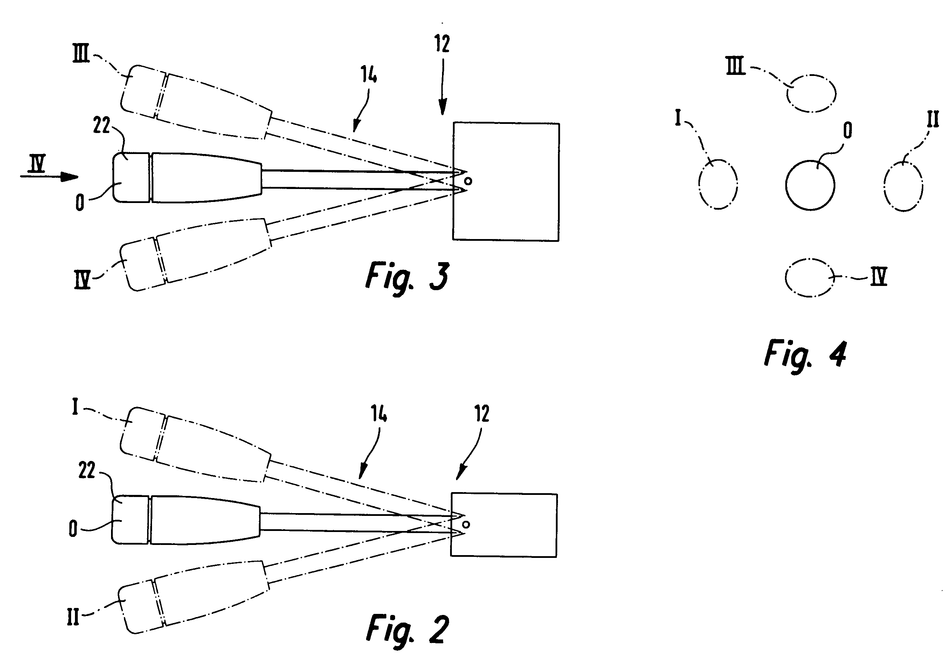

Fig. 1 zeigt ein erfindungsgemäßes Schaltersystem 10, das einen im Bereich des Lenkrades angeordneten Lenkstockschalter 12 mit einem Schalthebel 14, eine Steuer- und Regeleinheit 16 und ein Display 18 umfasst. Die Lenkasche des nicht dargestellten Lenkrades trägt das Bezugszeichen 19. Der Schalthebel 14 kann in verschiedenen Hebelstellungen, wie zu den Fig. 2 und 3 bzw. 5 und 6 beschrieben, betätigt werden. Der Lenkstockschalter 12 ist über eine Leitung 20, beispielsweise einem Bussystem, mit der Steuer- und Regeleinheit 16 verbunden. Die Steuer- und Regeleinheit 16 ist ihrerseits über eine Leitung 22 mit dem Display 18 verbunden, welches mögliche Menüfunktionen bzw. Schaltaufgaben anzeigt. Über Betätigen des Schalthebels 14 können auf dem Display 18 angezeigte Menüfunktionen angewählt und betätigt werden.

Als Eingangsgrößen der Steuer- und Regeleinheit 16 sind die Größen A und B vorgesehen, die beispielsweise den Betriebszustand des Fahrzeugs und auf das Fahrzeug wirkende Größen wiedergeben. Ausgangsgrößen der Steuer- und Regeleinheit sind mit den Buchstaben C, D, E, F, G, H beispielhaft dargestellt. Bei Anwählen und Betätigen einer entsprechenden Menüfunktion werden über die Ausgangsgrößen C - H entsprechende Schaltfunktionen ausgeführt. Dazu zählen beispielsweise das Verstellen von Außenspiegeln, das Bedienen des Fahrzeugradios, das Bedienen des Fahrzeugtelefons, das Bedienen elektrischer Fensterheber, das Bedienen eines Fahrzeugschiebedaches u.dgl..

Der in den Fig. 2 und 3 dargestellte Lenkstockschalter 12 weist einen Schalthebel 14 auf, der insgesamt in 5 Hebelstellungen bringbar ist. Fig. 2 zeigt die Draufsicht auf den Lenkstockschalter, Fig. 3 die Vorderansicht. In der Fig. 4 sind die 5 Schaltstellungen gemäß Ansicht IV dargestellt. Ausgehend von einer Neutralstellung 0 kann der Schalthebel 14 in die beiden in der horizontalen Ebene liegenden Hebelstellungen I und II sowie in die in der vertikalen Ebene liegenden Hebelstellungen III und IV betätigt werden. Der Schalthebel 14 umfasst einen Betätigungsschalter 22 in Form eines Tastschalters, der durch Drücken des freien Endes des Schalthebels 14 in Richtung der Längsachse des Schalthebels 14 betätigt wird. Über den Betätigungsschalter 22 werden die angewählten Menüfunktionen betätigt.

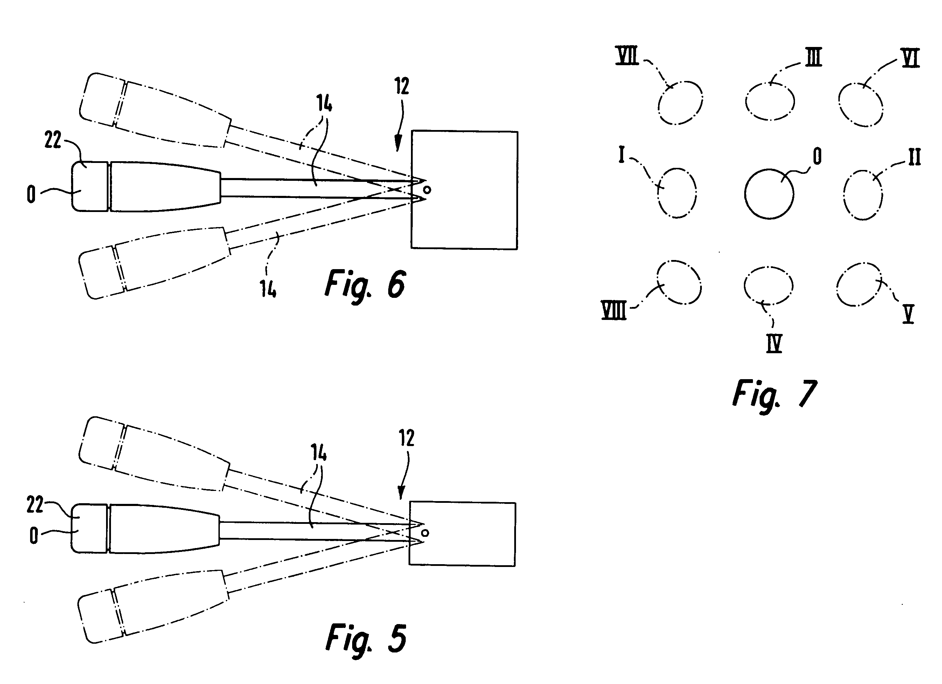

Die Fig. 5, 6 und 7 entsprechen im Wesentlichen den Fig. 2, 3 und 4, wobei der Schalthebel 14 gemäß Fig. 5 und 6 in insgesamt 9 Hebelstellungen, wie in Fig. 7 dargestellt ist, betätigt werden kann. Neben den horizontalen Hebelstellungen I und II und den vertikalen Hebelstellungen III und IV sind vier diagonale Hebelstellungen V, VI, VII und VIII vorgesehen.

Alle in der Beschreibung, den nachfolgenden Ansprüchen und der Zeichnung dargestellten Merkmale können sowohl einzeln als auch in beliebiger Kombination erfindungswesentlich sein.

## Patentansprüche

1. Lenkstockschalter (12) für ein Fahrzeug mit einem Schalthebel (14), der in mehrere Hebelstellungen (0, I - VIII) bewegbar ist, **dadurch gekennzeichnet, dass** über den Schalthebel (14) verschiedene Menüfunktionen einer programmierbaren Steuer- und/oder Regeleinheit (16) angewählt und gegebenenfalls betätigt werden können.

2. Lenkstockschalter (12) nach Anspruch 1, **dadurch gekennzeichnet, dass** die Hebelstellungen (0, I - VIII) als Raststellungen und/oder Taststellungen ausgebildet sind.

3. Lenkstockschalter (12) nach Anspruch 1 oder 2, **dadurch gekennzeichnet, dass** im Schalthebel (14) wenigstens ein Betätigungsschalter (22) angeordnet ist, der vorzugsweise als Tastschalter ausgebildet ist.

4. Lenkstockschalter (12) nach Anspruch 1, 2 oder 3, **dadurch gekennzeichnet, dass** die Menüfunktionen auf einem Display (18) angezeigt werden.

5. Schaltersystem (10) mit einem Lenkstockschalter (12) nach wenigstens einem der vorhergehenden Ansprüche, mit einer Steuer- und/oder Regeleinheit (16) und mit einem Display (18) zur Anzeige der Menüfunktionen.

6. Schaltersystem (10) nach Anspruch 5, **dadurch gekennzeichnet, dass** die Steuer- und/oder Regeleinheit (16) den Betriebszustand des Fahrzeuges erfasst und je nach Betriebszustand des Fahrzeuges Menüfunktionen sperrt oder freigibt.
